Europäisches Patentamt

European Patent Office

Office européen des brevets

(11) Publication number: 0 257 613
A2

# (12) EUROPEAN PATENT APPLICATION

(21) Application number: 87112274.3

(22) Date of filing: 25.08.87

(51) Int. Cl.4: G01G 19/413

(30) Priority: 29.08.86 IT 2155886

(43) Date of publication of application:
02.03.88 Bulletin 88/09

(84) Designated Contracting States:
AT BE CH DE ES FR GB GR IT LI LU NL SE

(71) Applicant: GIBERTINI ELETTRONICA S.r.l.
Via Bellini 29/31
I-20026 Novate Milanese (Milano)(IT)

(72) Inventor: Boffi, Vittoriano
Via Narni 16
I-00181 Roma(IT)

(74) Representative: Bosotti, Luciano et al
c/o Jacobacci-Casetta & Perani S.p.A. Via
Alfieri, 17
I-10121 Torino(IT)

(54) Device for chemical instrumentation.

(57) A digital type weighing scale (4) is associated with a microprocessor device (5) having a monitor (6) and a keyboard (7). Into the microprocessor device (5) there are stored data identifying chemical elements of the Periodic Table with their related molar mass values along with plural routines adapted to perform stoichiometric calculations. These calculations pertain to the stoichiometric equations of particular reactions, or to chemical-physical equations, wherein the mole number of a compound and the percent proportions of its elements, as well as the concentrations of solution, is to be determined. The whole development of said calculations may be carried out in accordance with different scales of measurement units.

FIG. 1

## Device for chemical instrumentation.

### Background of the invention

The present invention relates to a device for chemical instrumenation including a weighing scale.

A number of chemical instruments of this kind (usually referred to as electronic weighing scales) are already known in the art which can present a mass expressed in grams of a given element or chemical or biochemical field, however, the information provided by such electronic scales - i.e. an amount of an unspecified matter denoted in grams, taken alone - is of little interest. In fact, the experimentter is required to further process these information by appropriate arithmetical operations to obtain more meaningful data. This is particularly true for all those experiments or tests where reference is made to the mole as the unit of measurement.

The state of the art does not provide chemical weighing scales capable of presenting directly, as the results of a measurement, a number of moles and/or parameters directly related thereto.

In the preparation of solutions with a known concentration of one or more components, the prior art makes use of volumeric techniques which require, as a rule, the adoption of sufficiently large volumes in order to reduce the percentage of measuring errors. In addition, the dependence on the temperature of such techniques, the variations of which might drastically increase errors in measuring, must not be underestimated. Moreover, it has been difficult and cumbersome to strictly observe prearranged concentrations because no specific instrument can fully meet this demand. This is limitative inasmuch as it compels the experimenter to proceed each time by a series of weighing trials, and a series of more or less complicated calculations which, in the most laborious instances, require resorting to a computer.

Apparently, this always makes any preparation of a solution with an accurate concentration and/or any development of stoichiometric calculations a laborious process, because one cannot have a direct reading of the quatities involved in said calculations. Furthermore, it is not currently possible to obtain an immediate knowledge of the values of the elemental analysis of any compound without a slow development of the calculations involved.

Accordingly, one is more likely to incur procedure errors in the course of the development, and at the same time to become confused with the various scales of measurement units. This lengthens considerably the working time because the experimenter is obliged to constantly perform checks, whereby the working costs are also increased.

### Summary of the invention

The present invention has for its object to eliminate the above-mentioned drawbacks affecting the systems currently employed, by making and providing a device which can furnish molar parameters of any chemical compound whose formula is known, as well as the component element percentages, or relative concentrations in the instance of solutions, and all these making measures of mass by mere keying of a keyboard, with the results of such measures displayed on a monitor screen.

This and other objects of the invention will become more apparent from the ensuing description relating to a device according to the present invention including a chemical weighing scale of the type which comprises a microprocessor system, a monitor screen and an alphanumerical keyboard. The keyboard includes keys which permit the chemical element in the periodic table to be addressed, with their molar mass values being stored in a corresponding memory along with a certain number of formulae for calculating chemical and chemical-physical quantities related to the mole number of the various compounds. The microprocessor system preferably includes i.a. an EPROM memory containing calculations for processing elemental stoichiometric calculations for pertaining to stoichiometric equations of particular reactions or chemical-physical equations which require the determination of the mole number of a compound and the relative proportions of its elements, as well as the concentration of a solution.

To advantage, the device further affords storage and use of non-canonical symbols for setting by the operator. Preferably, the device is of a modular type, in the sense that the keyboard, monitor and body of the weighing scale may be integrated to a unitary compact construction or arranged in separate modules adapted for assembling in various configuration.

### Definitions

The definitions of the basic quantities and units referred to in the present specification and the annex ed claims are given in the following for the sake of clarity.

1. <u>Mole</u> of a specific element or compound of a given formula. This can be defined (according to 14th CGPM Resolution 3) as that quantity of a chemical compound with a defined empirical formula, which contains as many elementary entities as there are in 12g of $C^{12}$. Its unit of measure is the "mol"

2. <u>Molar mass</u> of a specific element or compound of a given formula. This can be defined the mass of 1 mole of an element or compound. Its unit of measure is "g mo $\overline{1}$ $^1$". The molar mass is a typical fixed quantity of each element or compound and can be drawn from the Periodic Charts of the Elements.

3. <u>Mole number</u> of a specific element or a given compound contained in a given amount (weight) of a substance placed on the pan of a scale. This can be calculated as follows:

$n = \dfrac{m}{M}$ [mol] where:

n = mole number of a specified element or compound

M = molar mass of a specified element or compound [g mo $\overline{1}$ $^1$]

m = mass of the substance [g] quantity measured by a proper weighing scale).

Rather obviously, once the mole number is known, the mass of a given element or compound in a substance can be calculated by multiplying the mole number by the molar mass.

4. <u>Mass of a specified chemical element or compound</u>: the amount of such element or compound measured by means of a weighing scale.

5. <u>Solution</u>: a single homogeneous liquid, that is a mixture in which the components (one or more solutes and solvents) are uniformly distributed throughout the mixture.

6. <u>Solvent</u>: that part of a solution which is present in the largest amount.

7. <u>Solute</u>: one of the components dissolved in a solvent. The concentration of a solution is usually expressed as the ratio of the mass of a solute to the overall mass of the solution (%) or the mass of the solute.

8. <u>Molar fraction</u> of a given compound dissolved in a solution (solute). This can be calculated as follows:

$$x_i = \frac{ni}{n* + \Sigma_i ni} = \frac{ni}{N}$$

where:

ni = number of moles of a given compound dissolved in the solution [mol]

n* = number of moles of the solvent [mol]

N = total number of moles (solutes + solvent [mol]

Obviously, the molar fraction "x" is a dimension-less quantity.

9. <u>Molality</u> of a given compound dissolved in a solution (solute): a mass concentration where the number of moles of a given solute is related to the <u>mass</u> of the <u>sol-vent</u>. This quantity can be calculated as follows:

$W_i = \dfrac{ni}{m*}$    [mol. $kg^{*-1}$]

where:

ni = number of moles of a given solute [mol]

m* = mass of solvent [kg*].

10. <u>Molarity</u> of a given compound dissolved in a solution (solute): a volume concentration in which the number of moles of a given solute is related to the <u>volume</u> of the <u>solution</u>. This quantity can be calculated as follows:

$C_i = \dfrac{ni}{V}$    [md.$dm^{-3}$]

where:

ni = number of moles of a given solute [mol]

V = volume of the solution [$dm^3$]

The present invention is substantially based on the understanding that all of the definitions and relationships given in the foregoing constitute, so to say, a closed system, in that each of the quantities 1 to 10 can be obtained from one or more of the others, provided that predetermined input data such as the formula of a given compound are given.

Detailed description of the invention

Further features and advantages of the invention will be more clearly apparent from the following detailed description of a preferred, though not exclusive, embodiment of a microprocessor-based device for chemical weighing scale, given hereinbelow with reference to the accompanying, purely illustrative, and hence not limitative, drawings in which:

-fig.1 is a general view of one embodiment of the device according to the invention, and

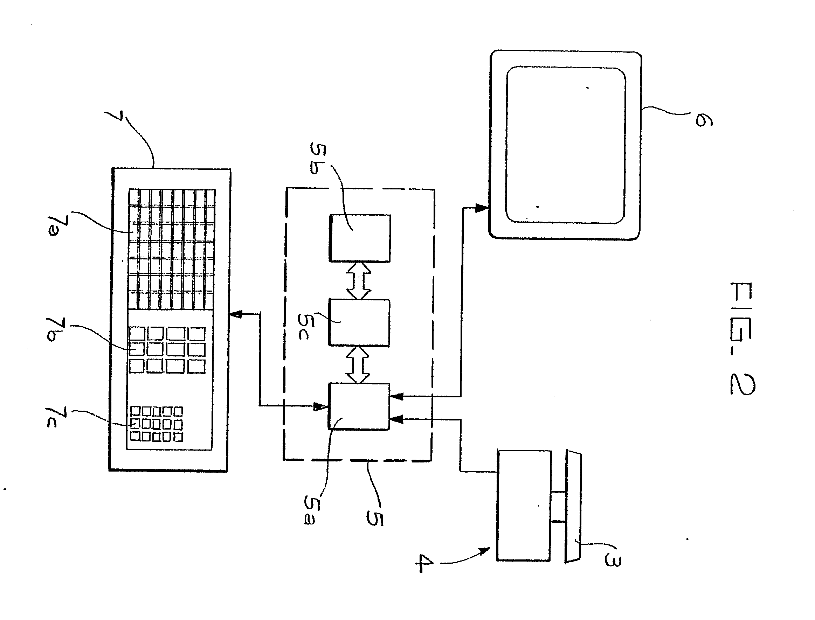

-fig.2 is a block diagram showing the internal structure of the device of fig.1.

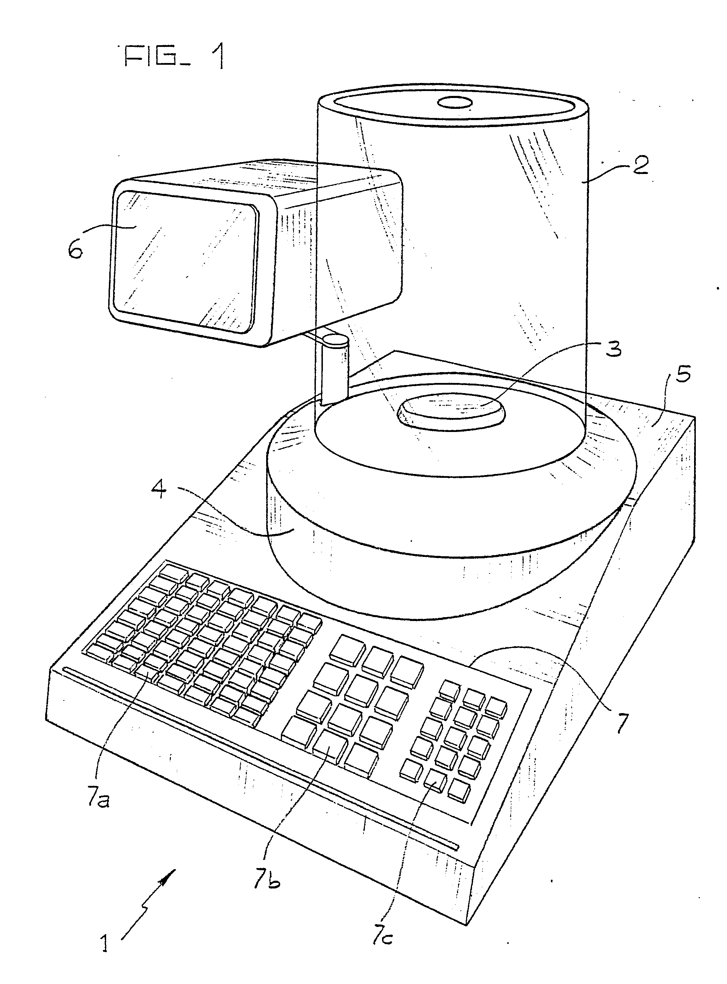

With reference to the drawing fig.1, indicated as 1 is the whole device in its entirety.

Indicated as 2 is a cap for access to a scalepan 3 of a weighing scale 4. The cap 2 has, in the embodiment shown, a cylindrical, fully enclosed shape and is of the slide-open type.

The weighing scale 4 is a unitary construction with the case for a microprocessor system 5 provided with a monitor 6 and a keyboard 7.

In the embodiment shown, the monitor 6 is of the adjustable pillar-mounted type. The keyboard 7 may be split into three functional zones. The left-hand zone 7a comprises keys for various elements of the Periodic Table, that is keys permitting basic data such as the molar mass of a given element/compound stored in the memory of the microprocessor system 5 to be addressed directly. In the alternative, the keys of the zone 7a may be used to enter identifying data of a given element/compound into the memory of the microprocessor system 5 for later retrieval and processing.

The central zone 7b of the keyboard comprises functional control keys identifying each at least one of the quantities/units indicated as 1 to 10 in the foregoing.

The right-hand zone 7c comprises numerical keys which can be used together with the keys of the lefthand zone 7a to enter numerical dat such as the value of the molar mass of the given element or the formula (numerical deponents) of a given compound into the microprocessor system 5.

Of course, this subdivision would apply to the embodiment shown in the drawings, and there is no reason for other configuration not to provide for alternative layouts of the keys on the keyboard 7.

According to a well-known standard layout, the microprocessor system 5 is comprised of:
- an input/output module 5a connected to the weighing scale 4, the monitor 6 and the keyboard 7,
-a memory (storage) module 5b, including RAM, ROM, EPROM units and the like for storing processing data and instructions, and
-an arithmetic/logic unit (ALU) 5c connected to both modules 5a,5b and adapted to perform arithmetical and logical operations on data obtained from the I/O module 5a and/or data stored in module 5b under instructions read from the module 5b itself or provided by the operator through keyboard 7.

In the memory module 5b there are stored, in a permanent form, the values for the molar masses of a given number of chemical elements known. The number of these elements may range from the whole number of the chemical elements of the periodic table to a lower value of sixty or less for those elements more commonly used in everyday's practice. The memory module 5b may also comprise an additional zone into which relevant data for chemical elements/compounds of interest may be selectively entered acting on keyboard 2.

Furthermore, in the memory module 5a of the microprocessor 5 there are also stored (preferably in an EPROM module) instructions which enable the formulas for calculating the chemical and chemical-physical quantities outlined at points 1 to 10 in the foregoing to be implemented. As indicated in the foregoing, the operation of the device of the invention is based on the capability of the unit 5 to implement those instructions corresponding to those formulas.

In any case, the amount of the instructions stored in the microprocessor 5 may vary between uses and additional instruction may be entered from outside in the additional zone of the memory module 5a acting on keyboard 7.

Exemplary description of use of the invention

For instance, in order to have the value of the molar mass of an element displayed on the monitor 6 it is enough to depress a key in the zone 7a of the keyboard pertaining to the element of interest and than depress the functional key of zone 7b relating to molar mass.

Alternatively, if the molar mass of a compound is required, the relative chemical formula can be called or entered by depressing appropriate keys 7a and 7c and then the functional key 7b relating to molar mass.

As a result, the microprocessor 5 will complete a sum of the molar masses of the chemical elements which make up the compound (taking into account the numerical deponents) and the numerical value of the molar mass of the compound as expressed in its pertinent measurement units will be displayed on the monitor screen 6.

The device of the invention may display on the monitor 6 both the value of the elemental moles of a compound and its mass expressed in grams. A functional key is also provided in the zone 7b to take into account any tare weight of a container with a solution placed on the scalepan 3 of the weighing scale 4.

Where the operator requires, for instance, an aimed quantity in moles of a compound, additional amounts of a substance can be loaded on the scalepan 3 of the weighing scale until the monitor 6 displays the value sought.

The device is therefore capable of presenting that aimed quantity in moles which is required to prepare an exact volume of a solution at any aimed molar concentration.

The experimenter may either set the volume to calculate the concentration or vice versa.

Thus, the experimenter would determine the moles of a compound to theerby obtain a solution whose concentration is related to a particular element or characterising group.

The device 1 is especially useful where one has to prepare a complex solution containing several components, each at a well-defined concentration level.

After setting the solution volume and/or mass, the individual compounds are added, and the microprocessor 5 sets the required moles for each of them.

On request, one could also obtain the molarity and molar fraction of any desired element or compound contained in a solution.

By means of a device 1, one can check that a certain weighted amount of chemical compound coincides with an anticipated amount.

This is accomplished by interaction of the weighing scale 4 with all the particular dedicated electronics of the microprocessor 5. In fact, the former will furnish the mass and the latter convert it into a number of moles and/or concentrations however expressed (i.e. molarity, molality).

By means of the instructions stored in the microprocessor 5 memory, one is able to read a quantity according to different measurement scales, mainly by utilizing the submultiples of the measurement units employed.

Thus, the invention achieves the objects set forth.

In fact, through the device 1, it becomes possible to carry out operations otherwise impossible to perform, that is to furnish directly the conventional data in grams for an amount of a chemically undefined matter, such as powders, alloys, tissues, and the like while furnishing the moles of any chemical compound whose empirical formula is known. The operator is no longer required to waste time in cumbersome calculations and/or in perusing charts pertaining to the values of the element molar masses.

In addition, according to the invention, one can prepare a solution of a given molarity or molality and handle the solution itself by adding or withdrawing the desired number of moles of a compound or even element, by means of a mass measure simply preformed by a common weighing scale.

The rates of error will also be reduced due to the availability of a direct, quick and totally automatic operation, even in connection with the value of the molar mass of a compound so that even an unskilled technician would be able to perform the more complex operations connected with the handling of solutions.

By virtue of its modular character, the device of the invention may cooperate with any electronic weighing scale types compatible therewith, for any applications. An interface for connection to a printer may be also provided. The device may also be incorporated to an automatic processing line.

stance into a solvent,
-memory means (5b) for at least temporariliy storing data corresponding to the molar mass of a given (7a) element, the molar mass of a given (7a) compound, the formula (7a,7c) of said compound and a concentration of said solution,
-processing means (5c) connected to said weighing scale (4) and memory means (5b) for implementing any of the formulae corresponding to the calculation of at least one entity selected from the group consisting of:

-the number of moles of said element in said substance,

-the number of mole of said compound in said substance,

-the mass of said element in said substance,

-the mass of said compound in said substance,

-the mass of solvent in said solution,

-the current value of the molality of said solution,

-the current value of the molar fraction of said solution,

-the current value of the molarity of said solution, and

-the current value of the concentration of said solution.

2. A device for chemical instrumentation according to claim 1, characterised in that it comprises a display unit for displaying any of said input data and any of the entities selected in said group.

3. A group according to claim 1 or 2, characterised in that it comprises a keyboard (7) for entering additional input data into said memory means.

## Claims

1. A device for chemical instrumentation, characterise in that it comprises:
-a weighing scale (3,4) for determining the mass of a substance, a solvent and a solution of a sub-

FIG. 1

0 257 613

FIG. 2

6

3

4

5

5b

5c

5a

7

7a

7b

7c